(19) Europäisches Patentamt

European Patent Office

Office européen des brevets

(11) EP 0 784 071 A1

(12) EUROPEAN PATENT APPLICATION
published in accordance with Art. 158(3) EPC

(43) Date of publication:
16.07.1997 Bulletin 1997/29

(51) Int. Cl.⁶: C08K 9/04, C08K 5/00,
C01B 35/12, C01F 11/00,
C01F 11/02

(21) Application number: 95932204.1

(22) Date of filing: 21.09.1995

(86) International application number:
PCT/JP95/01907

(87) International publication number:
WO 96/09342 (28.03.1996 Gazette 1996/14)

(84) Designated Contracting States:
DE GB

(30) Priority: 21.09.1994 JP 253061/94

(71) Applicants:
• MITSUBISHI CHEMICAL CORPORATION
Chiyoda-ku, Tokyo 100 (JP)
• SHIRAISHI CENTRAL LABORATORIES, CO. LTD.
Amagasaki-shi, Hyogo 600 (JP)

(72) Inventors:
• KORENAGA, Takashi
Hyogo 663 (JP)
• KONDO, Satoshi
Hyogo 660 (JP)
• MORITA, Hiroaki
Hyogo 660 (JP)
• SAWANOI, Yoshie
Nishinomiya-shi Hyogo 662 (JP)

(74) Representative: Hansen, Bernd, Dr. Dipl.-Chem.
et al
Hoffmann, Eitle & Partner,
Patentanwälte,
Arabellastrasse 4
81925 München (DE)

(54) **CALCIUM-BASE FILLER AND PROCESS FOR PRODUCING THE SAME**

(57) A calcium compound treated with a cycloinulooligosaccharide are obtained by the reaction of an aqueous calcium hydroxide suspension with carbonic acid gas, mineral acid or a salt thereof in the presence of a cycloinulooligosaccharide. The calcium compound has controlled crystal grain diameters and forms and is excellent in dispersibility and redispersibility, thus being useful as a filler.

EP 0 784 071 A1

## Description

FIELD OF THE INVENTION

The present invention relates to a new calcium-base filler and a process for producing the same. More particularly, it relates to a calcium-base filler having excellent dispersibility and redispersibility, and a process for producing the same.

BACKGROUND OF THE INVENTION

Various kinds of calcium-base fillers are used in very broad field since early times. For instance, calcium carbonate is used for a filler of rubber and plastic, a filler and coating for paper making, an extender, a tooth cleaner, a filler for synthetic paper or synthetic wood, and the like. Calcium phosphate is used for an inflating agent for bread and/or cake mix, a viscoelasticity improver for kneading powder, a pH buffer, an acid agent for powder drink, a tooth cleaner base, an additive for animal feed, a resin stabilizer, an additive for phosphor, an additive for glass, an auxiliary carrier for medical formulation, an abrasive, and the like. Calcium sulfoaluminate is used for a cement inflating agent, a coating pigment for paper making, and the like. Calcium borate is used for a pigment for inhibitive coating, a flame retarder, an ashproof agent, and the like.

As for the process for producing them, the process for producing calcium carbonate is known (Japanese Patent Publication Nos.37-519, 47-22944, 56-40118), wherein carbon dioxide is blown into limemilk which is an aqueous calcium hydroxide suspension. The process for producing calcium phosphate is known (Inorganic Phosphorus Chemistry, pages 168-170, edited and written by Takafumi Kanazawa), wherein, after producing $\alpha$-type tricalcium phosphate, under-water conversion reaction of phosphate compound is carried out in agar or in medium containing sodium dodecyl benzene sulfonate to produce fine crystalline coagulate particles. Another process is known (Japanese Patent Publication No.62-4324, or the like), wherein limemilk is milled and reacted with an aqueous phosphate solution, or the reaction is carried out under mill after mixing them, to produce fine hydroxyapatite which is calcium phosphate. The process for producing calcium sulfoaluminate is known (Japanese Patent Application Laid-Open No.53-14692), wherein limemilk and an aqueous solution of aluminum sulfate are instantaneously mixed and reacted in the vicinity of 40° C with a mixing agitator continuously which operates at a high speed and a high shearing force. The process for producing calcium borate is known (Japanese Patent Publication No.55-50890), wherein boric acid, calcium hydroxide and water are directly put into a mill such as a sand mill and a ball mill, or the mixture thereof which is previously mixed is put into the mill, thereafter, those are reacted synchronously with milling.

In those processes, in order to improve the properties such as the dispersibility indicating that a powder filler disperses to what degree of the grain size in rubber, plastic, coating, ink and so on, and the redispersibility indicating that a powder filler, which is obtained by the drying of a slurry filler in solvent, disperses to what degree when it is dispersed in solvent again, crystal grain diameters, crystal grain forms and the like are adjusted by the close temperature control for reaction, the addition of third material such as organic material or inorganic material, the mechanochemical reaction with milling or high shearing force, or the like. Those cause problems in that the precesses need many producing steps to thereby be costly and so on.

DISCLOSURE OF THE INVENTION

The inventors, as the result of investigations to solve the above problems, have found out the followings; those calcium compounds are made into a composite calcium compound with a cycloinulooligosaccharide, whereby a crystal grain diameters and forms are controlled, so that a calcium-base filler with fine dispersibility and redispersibility can be obtained and is useful as a filler for ink, coating, rubber or the like. Further, the inventors have found out firstly that the composite calcium compound can be synthesized easily by adding a cycloinulooligosaccharide to various kinds of reactant when a calcium compound is synthesized by using an aqueous calcium hydroxide suspension as a raw material, and thus the present invention has been completed.

Accordingly, the present invention provides a calcium-base filler which comprises, as an effective component, a composite calcium compound containing a calcium compound and a cycloinulooligosaccharide.

Further, the present invention provides a process for producing said composite calcium compound which comprises a step of producing a calcium compound by a precipitation reaction from an aqueous calcium hydroxide suspension, wherein said reaction is carried out in the presence of a cycloinulooligosaccharide.

BRIEF DESCRIPTION OF THE DRAWINGS

FIG. 1 is a photograph (transmission electron microscope photograph (×5000)) showing a crystal structure of a calcium sulfoaluminate filler obtained in the Example 8, instead of a drawing; and,

FIG. 2 is a photograph (transmission electron microscope photograph (×5000)) showing a crystal structure of a calcium sulfoaluminate filler obtained in the Comparative example 3, instead of a drawing.

<u>DETAILED DESCRIPTION OF THE PREFERRED EMBODIMENTS</u>

Preferred embodiments of the present invention will now be described in details.

The calcium compound of the present invention includes calcium carbonate, calcium phosphate such as calcium dihydrogen phosphate, calcium hydrogen phosphate, tribasic calcium phosphate, hydroxyapatite and fluoroapatite, calcium sulfoaluminate, calcium borate, or the like, which are synthesized by using limemilk which is an aqueous calcium hydroxide suspension as a raw material.

The cycloinulooligosaccharide used in the present invention is an oligosaccharide in which six through eight fructoses are bonded in a ring-shape, which was found out by Uchiyama et al. in 1989 (Carbohydrate Research, <u>192</u>,83-90 (1989)).

The origin of the cycloinulooligosaccharide is not particularly limited, for example, inulin which is a main component of carbohydrates obtained from a rhizome of artichoke, chicory, dahlia or the like, or inulin-included plant extract, is affected by a cycloinulooligosaccharide producing enzyme (cycloinulooligosaccharide fructanotransferase), microorganism producing that enzyme (Japanese Patent Application Laid-Open Nos. 2-252701, 2-255085, 4-237496) or incubation supernatant of that microorganism. In the present invention, the reaction product containing inulooligosaccharide which has been produced by the above process may be used as it is, or after separating and/or refining the product by a conventional method.

The composite calcium compound of the present invention is a composite particle containing the calcium compound and the cycloinulooligosaccharide, preferably, a composite particle in which the cycloinulooligosaccharide is deposited on the particle surface of the calcium compound.

The composite calcium compound of the present invention is obtained by producing a calcium compound in the presence of the cycloinulooligosaccharide, preferably, by precipitating a calcium compound in the presence of the cycloinulooligosaccharide when the calcium compound is produced by the precipitation reaction from the aqueous calcium hydroxide suspension which is a calcium source of the calcium compound.

Particularly, the composite calcium compound is obtained by the reaction of an aqueous calcium hydroxide suspension which is a calcium source of the calcium compound, with carbonic acid gas, mineral acid or a salt thereof in the presence of a cycloinulooligosaccharide.

The mineral acid or a salt thereof used in the present invention is selected, in accordance with a calcium compound to be produced, among phosphoric acid, ammonium dihydrogen phosphate, ammonium trihydrogen phosphate, aluminum sulfate, boric acid, sodium borate and the like.

Particular embodiments for the process for producing the composite calcium compound will be described below.

(1) Synthesis of Calcium Carbonate

The process for producing calcium carbonate by blowing carbonic acid gas into limemilk can be divided into two methods based on carbonation conditions. As usual conditions, one method concerns colloidal calcium carbonate of average particle size not more than $0.1 \mu m$, namely, cube particle, wherein carbonic acid gas is blown into limemilk of which calcium hydroxide concentration not more than 15% at a combination starting temperature not more than 25°C with a blowing speed not less than 2.0L/min by 100% conversion for calcium hydroxide 1Kg, and they are reacted to produce calcium carbonate. The other method concerns light calcium carbonate of average particle size not less than $0.5 \mu m$, namely, fusiform particle, wherein carbonic acid gas is blown into limemilk of which calcium hydroxide concentration is not less than 15% at a combination starting temperature not less than 25°C with a blowing speed not more than 2.0L/min by 100% conversion for calcium hydroxide 1Kg, and they are reacted to produce calcium carbonate. In the present invention, without particularly controlling combination temperature, blowing speed of carbonic acid gas and the like, a cycloinulooligosaccharide is added in an amount of 0.1-30 parts by weight based on 100 parts by weight of the calcium hydroxide to limemilk, preferably, to limemilk of which calcium hydroxide concentration is 4-20 wt%, then the mixture is stirred sufficiently to obtain a homogeneous slurry and then subjected to carbonation, whereby desired composite calcium carbonate particles can be obtained.

(2) Synthesis of Calcium Phosphate

Hydroxyapatite which is a kind of calcium phosphates can be obtained by a wet combination method in which an aqueous solution of phosphoric acid or a salt thereof is added gradually into limemilk of which calcium hydroxide concentration is 4-20 wt%, until the Ca/P mole ratio becomes about 1.6-1.7 (stoichiometric mole ratio is 1.67) while stirring the limemilk. The cycloinulooligosaccharide is added to limemilk in an amount of 0.1-30 parts by weight based on 100 parts by weight of the calcium hydroxide. As for the process for addition, it is preferable that the cycloinulooligosaccharide is added to limemilk, and the mixture is stirred sufficiently so as to be a homogeneous slurry and then subjected to phosphoration. With this method, fine needles of composite hydroxyapatite particles can be obtained.

(3) Synthesis of Calcium Sulfoaluminate

Calcium sulfoaluminate can be obtained by adding and reacting aluminum sulfate solution of which aluminum sulfate concentration is about 5-10 wt% to limemilk of which aluminum sulfate concentration is about 4-20 wt%, in a manner that the $CaO/Al_2O_3$ mole ratio becomes about 6-8. The cycloinulooligosaccharide is added to limemilk in an amount of 0.1-30 parts by weight based on 100 parts by weight of the calcium hydroxide. As for the process for addition, it is preferable that the cycloinulooligosaccharide is added to the limemilk, and the mixture is stirred sufficiently so as to be a homogeneous slurry and then aluminum sulfate is added. With this method, fine needles of composite calcium sulfoaluminate particles can be obtained.

(4) Synthesis of Calcium Borate

As to crystalline calcium borate, amorphous calcium borate is firstly obtained by adding limemilk of which calcium hydroxide concentration is about 4-20 wt% to an aqueous solution of boric acid, anhydride thereof, borax or the like of which boron concentration is about 5-20 wt% while stirring them in a manner that the Ca/B mole ratio becomes about 0.35-1.0. The cycloinulooligosaccharide is added to limemilk in an amount of 0.1-30 parts by weight based on 100 parts by weight of the calcium hydroxide. As for the process for addition, it is preferable that the cycloinulooligosaccharide is added to the limemilk, and they are stirred sufficiently, then they are added to the aqueous solution including a boron source. With this method, amorphous calcium borate is left in slurry or in paste after filtering and dehydrating as it is, whereby crystalline composite calcium borate particles can be obtained at a short time.

A composite calcium compound obtained in the present invention can be used as a calcium-base filler as it is, and can also be used by mixing with other fillers such as magnesium calcium carbonate on demand.

Hereinafter, the present invention will be described in more detail below with reference to examples, but is not construed to be limited to the following examples so far as not being far beyond the spirit and scope of the invention.

Incidentally, the cycloinulooligosaccharide used in the following examples, which has been prepared in accordance with the method described in Japanese Patent Application Laid-Open No. 4-237496, is the mixture including cycloinulohexaose, cycloinuloheptaose, and cycloinulooctaose in the weight ratio of 5:2:0.1 respectively.

〈Example 1〉

In a 2L stainless beaker, 4.1g of a cycloinulooligosaccharide solution of 10wt% was added to 1000g of limemilk of 6wt% while being stirred, and after stirring and mixing for 10 minutes, carbonic acid gas of 30% concentration was blown into the mixture with the speed of 0.3L/min at the combination starting temperature 17°C and reacted until the conductivity in the suspension secondary lowers to be stable. The reaction mixture was sucked and filtered by a Nutsche, and the mother liquor was separated and then was dried and ground to obtain calcium carbonate particles. The calcium carbonate particle was a colloidal particle having the BET specific surface area of $30m^2/g$. The BET specific surface area was measured by the $N_2$ gas suction method (instrument: Flowsorb II2300, Micromeritics Corporation).

Moreover, the heating loss to the complete thermal decomposition temperature 500°C of the cycloinulooligosaccharide was measured, and the measured result was 3.2%. The heat loss was measured by the high temperature type differential thermal/thermal weight measuring instrument TG/DTA320 type produced by SEIKO Electronic Company, and the heat loss from the room temperature to 500°C was obtained.

〈Examples 2, 3 and Comparative example 1〉

Calcium carbonate particles were obtained in accordance with the same producing method as Example 1 under the condition shown in Table 1 (without adding a cycloinulooligosaccharide in the Comparative example 1).

The differences between the heat losses shown in the Examples 1-3 and the heat loss of the Comparative example 1 when the calcium carbonate particles were heated to 500°C at which the cycloinulooligosaccharide is completely decomposed and which is not more than the decomposition temperature of the calcium carbonate, indicate the amounts of the cycloinulooligosaccharide deposited (physically or chemically) on the composite calcium carbonate particles obtained by drying and grinding in the above examples and comparative example.

$$\text{cycloinulooligosaccharide depositing amount (\%)} = \frac{\text{Heat loss (\%) of Composite Calcium Carbonate}}{\text{Heat loss (\%) of Calcium Carbonate Only}}$$

It can be recognized that the calcium carbonate particles of the present invention has been improved in the particle diameter according to the BET specific surface area and the cycloinulooligosaccharide has been included according to the heat loss.

Table 1

|  | E1 | E2 | E3 | C1 |
|---|---|---|---|---|
| [Producing Condition] |  |  |  |  |
| Limemilk Concentration(%) | 6 | 10 | 8 | 6 |
| Limemilk Putting Into Amount(g) | 1000 | 600 | 750 | 1000 |
| Combination Temperature(°C) | 17 | 35 | 28 | 17 |
| 10% Cycloinulooligosaccharide Addition Amount(g) | 4.1 | 61 | 122 | 0 |
| 30% Carbonic Acid Gas Flow Velocity(L/min) | 0.3 | 2.0 | 1.0 | 0.3 |
| [Property of Filler] |  |  |  |  |
| BET Specific Surface area($m^2$/g) | 30 | 60 | 80 | 5 |
| Heat Loss(%) | 3.2 | 6.1 | 7.2 | 2.7 |
| Cycloinulooligosaccharide Depositing Amount(%) | 0.5 | 3.4 | 4.5 | 0 |
| E: Example C: Comparative example |  |  |  |  |

〈Example 4〉

In a 2L stainless beaker, 5g of cycloinulooligosaccharide solution of 10wt% was added to 710g of limemilk of 10wt% while being stirred, and after stirring and mixing for 10 minutes, 133g of an aqueous phosphoric acid solution of 42.5% concentration was added gradually for about 30 minutes. Thereafter, the temperature of the reaction mixture was raised to 80°C, and kept heated for 24 hours while stirring so as to be aged. The reaction mixture was sucked and filtered by a Nutsche, and the mother liquor was separated and then was dried and ground so as to obtain hydroxyapatite particles. The hydroxyapatite particle was a needle particle having the BET specific surface area of 90$m^2$/g and the sedimentation volume after 1 hour standing for the particle concentration of 1% was 30ml.

The sedimentation volume was measured by reading the sedimentation volume (ml) scale after putting 1g of the obtained particles and 99g of ion exchange water into a 100 ml sedimentation pipe with a stopper, shaking them hard for 20 seconds in a manner that the contents were mixed homogeneously and leaving at rest for 1 hour.

〈Examples 5,6 and Comparative example 2〉

Hydroxyapatite particles were obtained in accordance with the same producing method as Example 4 under the condition shown in Table 2 (without adding a cycloinulooligosaccharide in the Comparative example 2).

Table 2

| | E4 | E5 | E6 | C2 |
|---|---|---|---|---|
| [Producing Condition] | | | | |
| Limemilk Concentration(%) | 10 | 10 | 8 | 10 |
| Limemilk Putting Into Amount(g) | 710 | 710 | 888 | 710 |
| Combination Temperature(°C) | 17 | 20 | 23 | 17 |
| 10% Cycloinulooligosaccharide Addition Amount(g) | 5 | 20 | 50 | 0 |
| Phosphor Concentration(%) | 42.5 | 40 | 28 | 42.5 |
| Phosphoric Acid Putting Into Amount(g) | 133 | 141 | 202 | 133 |
| Aging Temperature(°C) | 80 | 70 | 60 | 80 |
| Aging Time(hr) | 24 | 24 | 48 | 24 |
| [Property of Filler] | | | | |
| BET Specific Surface area($m^2$/g) | 90 | 112 | 146 | 68 |
| Sedimentation Degree(1%/ml/hr) | 30 | 35 | 55 | 25 |
| E: Example<br>C: Comparative example | | | | |

〈Example 7〉

In a 500ml stainless beaker, 1.9g of cycloinulooligosaccharide solution of 10wt% was added to 68g of limemilk of 13wt% while being stirred, and after stirring and mixing for 10 minutes, 64g of an aqueous aluminum sulfate solution of 8% concentration was added at 50°C. Thereafter, the stirring was continued, and the reaction mixture was heated and kept for 3 hours at 90°C so as to be aged. The reaction mixture was then sucked and filtered by a Nutsche, and the mother liquor was separated, and then was dried and ground so as to obtain calcium sulfoaluminate particles. The calcium sulfoaluminate particle thus produced was a needle particle of which the BET specific surface area was $18m^2$/g, the average length was 1.0μm, and the average breadth was 0.5μm observed by a transmission electron microscope photograph.

〈Example 8 and Comparative example 3〉

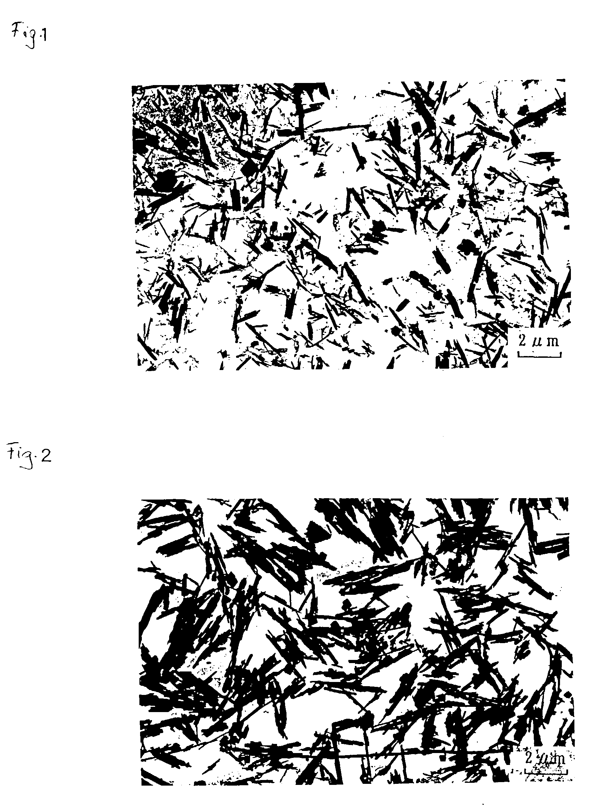

Calcium sulfoaluminate particles were obtained in accordance with the same producing method as Example 7 under the condition shown in Table 3 (without adding a cycloinulooligosaccharide in the Comparative example 3). FIG. 1 shows a crystal structure of calcium sulfoaluminate particle obtained in the Example 8 (transmission electron microscope photograph (×5000)). Further, FIG. 2 shows a crystal structure of calcium sulfoaluminate particle obtained in Comparative example 3 (transmission electron microscope photograph (×5000)).

Table 3

| | E7 | E8 | C3 |
|---|---|---|---|
| [Producing Condition] | | | |
| Limemilk Concentration(%) | 13 | 6 | 13 |
| Limemilk Putting Into Amount(g) | 68 | 112 | 68 |
| Combination Temperature(°C) | 50 | 40 | 50 |
| 10% Cycloinulooligosaccharide Addition Amount(g) | 1.9 | 9.4 | 0 |
| Aluminum Sulfate Concentration(%) | 8 | 6 | 8 |
| Aluminum Sulfate Addition Amount(g) | 64 | 85.5 | 64 |
| Aging Temperature(°C) | 90 | 35 | 90 |
| Aging Time(hr) | 3 | 3 | 3 |
| [Property of Filler] | | | |
| BET Specific Surface area($m^2$/g) | 18 | 21 | 8 |
| Electron Microscope Observation | | | |
| Average Particle Diameter Length×Breadth($\mu$m) | 1.0×0.05 | 0.5×0.03 | 2.0×0.20 |
| E: Example<br>C: Comparative example | | | |

〈Example 9〉

In a 1L glass beaker, the mixed solution of 10g of cycloinulooligosaccharide solution of 10wt% and 113g of limemilk of 15wt% was added to 285g boric acid solution at 10wt% concentration of which the liquid temperature was kept at 60°C, and they were stirred for 60 minutes to complete the first reaction. The first reaction product (amorphous) was sealed up in the glass beaker and left for two weeks at the room temperature, and the second reaction (crystalline conversion) was completed. The reaction mixture was sucked and filtered by a Nutsche, and the mother liquor was separated and then was dried and ground so as to obtain calcium borate particles. This particle was identified as the crystal $CaO \cdot B_2O_3 \cdot 5H_2O$, and the BET specific surface area was 16.5$m^2$/g.

〈Comparative example 4〉

Calcium borate fine particles were produced in accordance with the same producing method as Example 9 without adding a cycloinulooligosaccharide. The obtained second reaction product was amorphous.

〈Applied example 1: Redispersibility to Water〉

Into a 100ml sedimentation pipe with a stopper, 2g of calcium carbonate particles as a sample and 98g of ion exchange water were put, shaken hard for 20 seconds to mix the contents homogeneously and then left at rest. The sedimentation volumes (ml) scale after 1, 3 and 24 hours were read, whereby the redispersibility and the dispersal-stability of the particles were investigated. Concerning colloidal calcium carbonate on the market (Shiraishi Kogyo Kaisha, Ltd.) as a reference sample, physical properties were measured in the same way. The results are shown in Table 4. The standard for the evaluation of the redispersibility is shown as follows.

◎: No supernatant after redispersing and leaving at rest for 3 hours;
○: No supernatant after redispersing and leaving at rest for 1 hour;
△: 5ml sedimentation volume after redispersing and leaving at rest for 1 hour; and,
X: Not more than 2ml sedimentation volume after redispersing and leaving at rest for 1 hour.

The standard for the evaluation of the dispersal-stability are shown as follows.

○: No supernatant after redispersing and leaving at rest for 24 hours;

△: 5ml sedimentation volume after redispersing and leaving at rest for 24 hours; and,

X: Not more than 2ml sedimentation volume after redispersing and leaving at rest for 24 hours.

Table 4

|  | The Present Invention | On Market |
|---|---|---|
| [Property of Filler] |  |  |
| BET Specific Surface Area($m^2$/g) | 60 | 16.5 |
| [Sedimentation Volume] |  |  |
| After 1 hour(ml) | No supernatant | 4.5 |
| After 3 hours(ml) | No supernatant | 4.5 |
| After 6 hours(ml) | No supernatant | 4.5 |
| After 24 hours(ml) | No supernatant | 5.0 |
| [Evaluation] |  |  |
| Redispersibility | ◎ | △ |
| Dispersal-stability | ○ | △ |

〈Applied example 2: Applied example to Ink〉

3g of the sample obtained in Example 2 and 2g of boiled linseed oil as vehicle were kneaded by Hoover muller to prepare ink. The ink was applied to a coating opacifying rate measuring paper with a film applicator, and the transparency was evaluated with the naked eye. Moreover, a diffuse reflectance and a contrast rate were measured. As to the diffuse reflectance and the contrast rate, CR cells wherein backgrounds are black and white were filled with the prepared ink not to include bubbles, and then the cells, which the excess samples were scraped to be flat while the surface was made smooth by a scrape blade, were set to a ket photoelectric whiteness meter, the reflectance of each cells were measured with green light, and the contrast rate was obtained in accordance with the following formula.

$$\text{Formula: } CR = \frac{\text{black cell diffuse reflectance (\%)}}{\text{white cell diffuse reflectance (\%)}}$$

As a comparative example, ink was prepared by calcium carbonate for ink on the market (Shiraishi Kogyo Kaisha, Ltd.) instead of the sample obtained in Example 2, and the physical properties were measured in the same way. The results are shown in Table 5.

Table 5

|  | E2 Samples | On Market |
|---|---|---|
| BET Specific Surface Area($m^2$/g) | 60 | 51 |
| Dispersible Particle($\mu$m) | 10 | 16 |
| Transparency(3ml coating) |  |  |
| Evaluation with Eyes | ◎ | ○ |
| Diffuse Reflectance |  |  |
| $R_B$(%) | 17.3 | 19.1 |
| $R_W$(%) | 68.3 | 59.8 |
| Contrast Rate($R_B/R_W$) | 0.25 | 0.32 |

〈Applied example 3: Applied example to Coating Material〉

First Step: Preparation of Pigment Dispersion A

The following materials were put into a 300ml poly cup, and stirred and mixed with a disperser (3000rpm) for 60 minutes, whereby pigment dispersion A was obtained.

[Materials for Pigment Dispersion A]

JR600A (Product of Teika Company, rutil titanium dioxide for coating): 130 parts by weight
Example 1 Sample: 79.5 parts by weight
Poiz 521 (Product of Kao Company, polycarboxylic acid dispersant): 10 parts by weight
Ethylene Glycol: 20 parts by weight
Best Side FX (Product of Dainippon Ink Chemical Industries, 1,2-benzothiazolon): 1.0 parts by weight
SN Deformer 121 (Product of Sunnopko Company, antifoamer): 0.5 parts by weight
Water: 59 parts by wight
3% Cellosize QP-4400H (Product of Union Carbide Limited, hydroxyethyl cellulose): 20 parts by wight

Second Step: Preparation of Emulsion Dispersion B

The following materials were put into a 1L poly cup, and stirred and mixed with a disperser (1500rpm) for 10 minutes, whereby emulsion dispersion B was obtained.

[Materials for Emulsion Dispersion B]

Boncoat EC-863 (Product of Dainippon Ink Chemical Industries, acrylic styrene emulsion): 627 parts by weight
CS-12 (Product of Chisso Petrochemical Corporation, 2,2,4-trimethyl pentanediol-1.9-monoisobutylate): 20 parts by weight
Swazol 310 (Product of Maruzen Petroleum, mineral turpentine): 15 parts by weight
Safinoru B41-58 (Product of Nisshin Chemical Industries, antifoamer): 2 parts by weight
Adecanol UH438 (Product of Asahi Denka Industries, thickener) 15%: 16 parts by weight

Third Step: Preparation of Emulsion Coating

The Pigment Dispersion A and Emulsion Dispersion B were put into a 2L poly container, and mixed with a disperser (1500rpm) for 5 minutes, whereby emulsion coating was obtained. As to the obtained coating, B viscosity (Brookfield viscosity meter) and thixoindex were measured in accordance with the rotational viscosity measuring method in the JIS (Japanese Industrial Standard) K5400 Section 4.5.3, film gloss was measured in accordance with the specular gloss in the JIS 5400 Section 7.6 and shield rate was measured in accordance with the JIS 5400 Section 7.2. As a comparative example, coating was prepared by using calcium carbonate for coating on the market (Product of Shiraishi Kogyo Kaisha, Ltd.) instead of the sample obtained in Example 1, and physical properties were measured in the same way. The results are shown in Table 6.

Table 6

| | E1 Sample | On Market |
|---|---|---|
| BET Specific Surface Area($m^2$/g) | 30 | 16.5 |
| Dispersibility (Evaluation with Eyes) | ◎ | ○ |
| B Viscosity(25°C) | | |
| $\eta_4$(cP) | 51000 | 47500 |
| $\eta_{20}$(cP) | 18000 | 17600 |
| TI($\eta_4/\eta_{20}$) | 2.8 | 2.7 |
| Film Gloss(4mil) | | |
| 60° Gloss(%) | 82.3 | 76.6 |
| Shield Rate(4mil) | 0.935 | 0.932 |

〈Applied example 4: Applied example to Rubber〉

The following materials were mixed sequentially using a 8-inch roll for rubber compounding to obtain rubber compound.

[Materials for Rubber compound]

Kuraprene IR: (Product of Kurare Corporation, isoprene rubber): 100 parts by weight
Stearic Acid: 2 parts by weight
Zinc flower (Product of Seido Chemical Company, zinc oxide): 5 parts by weight
Dibenzothiazole-disulfide (Product of Ohuchishinko Chemical Industries): 1 parts by weight
Diphenylguanidine (Product of Ohuchishinko Chemical Industries): 0.3 parts by weight
Sulfur: 2 parts by weight
Example 2 Sample: 75 parts by weight

As to the obtained rubber compound, Moony viscosity was measured in accordance with the Moony viscosity test in JIS K6300 Section 6, scorch time was measured in accordance with the Moony scorch test in JIS K6300 Section 7 and optimum vulcanization time was measured in accordance with the disc vulcanization test in JIS K6300 Section 8.3. As the vulcanization rubber test, stretch stress ($M_{500}$), stretch strength ($T_B$) and elongation ($E_B$) were measured in accordance with JIS 6301.3 and hardness ($H_S$) was measured in accordance with JIS 6301.5.

As a comparative example, rubber compound was prepared by using calcium carbonate for coating on the market (Product of Shiraishi Kogyo Kaisha, Ltd.) instead of the sample obtained in Example 2, and physical properties were measured in the same way. The results are shown in Table 7.

Table 7

| | E2 Sample | On Market |
|---|---|---|
| BET Specific Surface Area($m^2$/g) | 60 | 26 |
| [Unvulcanized Rubber Test] | | |
| Moony Viscosity(100°C) | 38.6 | 16.6 |
| Scorch Time(125°C) | 11.3 | 9.9 |
| Optimum Vulcanization Time(138°C,min.) | 11.7 | 9.7 |
| [Vulcanized Rubber Test] | | |
| Vulcanization Time(min.) | 10 | 10 |
| $M_{500}$(kgf/$cm^2$) | 56 | 40 |
| $T_B$(kgf/$cm^2$) | 283 | 265 |
| $E_B$(%) | 810 | 810 |
| $H_S$(JIS) | 50 | 44 |

INDUSTRIAL APPLICABILITY

According to the present invention, a cycloinulooligosaccharide is added when a calcium compound is produced, whereby the particle diameter and the crystal form of the obtained compound can be controlled, therefore, the calcium compound is useful as fillers having excellent dispersibility and redispersibility.

**Claims**

1. A calcium-base filler which comprises a composite calcium compound containing a calcium compound and a cycloinulooligosaccharide as an effective component.

2. A calcium-base filler according to Claim 1, which comprises said composite calcium compound as an effective component wherein said cycloinulooligosaccharide is deposited on a surface of said calcium compound.

3. A calcium-base filler according to Claim 1, wherein said calcium compound is calcium carbonate, calcium phosphate, calcium sulfoaluminate or calcium borate.

4. A process for producing a composite calcium compound, which comprises producing a calcium compound by a precipitation reaction from an aqueous calcium hydroxide suspension, wherein the precipitation reaction is carried out in the presence of a cycloinulooligosaccharide.

5. The process for producing a composite calcium compound according to Claim 4, which comprises a step reacting said aqueous calcium hydroxide suspension with carbonic acid gas, mineral acid or a salt thereof in the presence of said cycloinulooligosaccharide.

6. The process for producing a composite calcium compound according to Claim 4, wherein the amount of said cycloinulooligosaccharide is 0.1-30 parts by weight based on 100 parts by weight of said calcium hydroxide.

7. A process for producing a composite calcium carbonate particles, which comprises a step wherein a cycloinulooligosaccharide is added to limemilk of which calcium hydroxide concentration is 4-20 wt% in an amount of 0.1-30 parts by weight based on 100 parts by weight of calcium hydroxide to obtain a homogeneous slurry, then carbonic acid gas or carbonate is added to the slurry.

8. A process for producing a composite hydroxyapatite particles, which comprises a step wherein a cycloinulooligosaccharide is added to limemilk of which calcium hydroxide concentration is 4-20 wt% in an amount of 0.1-30 parts by weight based on 100 parts by weight of calcium hydroxide to obtain a homogeneous slurry, then an aqueous solution of phosphoric acid or a salt thereof is added to the slurry while stirring to conduct reaction.

11

9. A process for producing a composite calcium sulfoaluminate particles, which comprises a step wherein a cycloinulooligosaccharide is added to limemilk of which calcium hydroxide concentration is 4-20 wt% in an amount of 0.1-30 parts by weight based on 100 parts by weight of calcium hydroxide to obtain a homogeneous slurry, then an aqueous solution of aluminum sulfate of which aluminum sulfate concentration is 5-10 wt% is added to the slurry while stirring to conduct reaction.

10. A process for producing a composite crystalline calcium borate particles, which comprises:

a step wherein a cycloinulooligosaccharide is added to limemilk of which calcium hydroxide concentration is 4-20 wt% in an amount of 0.1-30 parts by weight based on 100 parts by weight of calcium hydroxide to obtain a homogeneous slurry;
a step wherein said slurry is added to an aqueous solution of boric acid, anhydride thereof, or borax of which boron concentration is 5-20 wt% while stirring to obtain amorphous calcium borate; and,
a step wherein said slurry of amorphous calcium borate or a paste after filtering and dehydrating said slurry is left as it is.

Fig.1

2 μm

Fig.2

2 μm

## INTERNATIONAL SEARCH REPORT

| International application No. |
|---|
| PCT/JP95/01907 |

**A. CLASSIFICATION OF SUBJECT MATTER**

Int. Cl$^6$  C08K9/04, C08K5/00, C01B35/12, C01F11/00, C01F11/02

According to International Patent Classification (IPC) or to both national classification and IPC

**B. FIELDS SEARCHED**

Minimum documentation searched (classification system followed by classification symbols)

Int. Cl$^6$  C08K9/04, C08K5/00, C01B35/12, C01F11/00, C01F11/02

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 51-101049, A (Kanegafuchi Chemical Industry Co., Ltd.), September 7, 1976 (07. 09. 76), Claim (Family: none) | 1 - 10 |

☐ Further documents are listed in the continuation of Box C.  ☐ See patent family annex.

| | |
|---|---|
| *    Special categories of cited documents: | "T"   later document published after the international filing date or priority date and not in conflict with the application but cited to understand the principle or theory underlying the invention |
| "A"  document defining the general state of the art which is not considered to be of particular relevance | |
| "E"  earlier document but published on or after the international filing date | "X"   document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"   document member of the same patent family |

| Date of the actual completion of the international search | Date of mailing of the international search report |
|---|---|
| November 24, 1995 (24. 11. 95) | December 12, 1995 (12. 12. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)